# EUROPEAN PATENT APPLICATION

(11) **EP 4 797 286 A1**
(43) Date of publication of application: **26.08.2026**
(21) Application number: 26152960.6
(22) Date of filing: 20.01.2026
(51) Int. Cl.: G21D 1/00, G21C 19/14, B09B 3/35

(54) **METHOD FOR DISMANTLING CALANDRIA VESSEL UNDERWATER AND APPARATUS OF DISMANTLING THE SAME**

(30) Priority: 20.02.2025 KR 20250022261
(71) Applicant: Doosan Enerbility Co., Ltd., Seongsan-gu Changwon-si, Gyeongsangnam-do 51711 (KR); Korea Hydro & Nuclear Power Co., Ltd, Gyeongju-si, Gyeongsangbuk-do 38120 (KR)
(72) Inventor: Park, Kwang Soo, Seoul 02225 (KR); Pak, Dong Hun, Ulsan 44617 (KR); Kim, Chang Kyu, Changwon-si, Gyeongsangnam-do 51471 (KR); Kim, Hae Woong, Changwon-si, Gyeongsangnam-do 51319 (KR); Lim, Chung Sik, Changwon-si, Gyeongsangnam-do 51431 (KR); Lim, Tae Seob, Seoul 06912 (KR); Kim, Min Chul, Daejeon 34101 (KR); Na, Young Il, Daejeo 34101 (KR); Ryu, Gang Woo, Daejeon 34101 (KR)
(74) Representative: BCKIP Part mbB

(57) **Abstract**

A method for dismantling a calandria vessel (200) underwater is provided. The method for dismantling the calandria vessel underwater includes filling an inside of a concrete vault (100) in which a calandria vessel is installed with water; opening the concrete vault by dismantling an RM-deck (10); installing a manipulator (400) on the calandria vessel; dismantling an upper portion to cut and dismantle an upper portion of the calandria vessel and a fuel tube (300) disposed inside the upper portion of the calandria vessel using the manipulator; and dismantling a lower portion to cut and dismantle a lower portion of the calandria vessel and a fuel tube disposed inside the lower portion of the calandria vessel using the manipulator.

## Description

This application claims priority to Korea Patent Application No. 10-2025-0022261, filed February 20, 2025.

### FIELD

Apparatuses and methods consistent with exemplary embodiments relate to a method for dismantling a calandria vessel underwater and an apparatus for dismantling the same, and more particularly, to a method and apparatus for dismantling a calandria vessel underwater capable of safely dismantling the calandria vessel and a fuel tube in an underwater environment using various types of devices mounted in a manipulator installed in the calandria vessel, thereby reducing radiation exposure to workers.

### BACKGROUND

A heavy-water reactor facility used in nuclear power generation includes a calandria, a calandria vault configured to accommodate the calandria, and components located inside and outside the calandria. Conventionally, there have been cases of replacing components located inside and outside the calandria, but there have been no cases of dismantling the entire heavy-water reactor facility, including the calandria .

When dismantling a reactor in the heavy water reactor facility, exposure to radiation occurs due to the dismantling work. Therefore, it is necessary to reduce radiation exposure and minimize or prevent contamination from spread of radioactive materials. However, currently, there are no adequate or effective measures in place for the stable and effective dismantling of heavy-water reactor type nuclear power plants.

### SUMMARY

Aspects of one or more exemplary embodiments provide a method for dismantling a calandria vessel underwater and an apparatus for dismantling the same capable of safely dismantling the calandria vessel and fuel tube in the underwater environment using various devices mounted in the manipulator installed in the calandria vessel, thereby reducing radiation exposure to workers.

Additional aspects will be set forth in part in the description which follows and, in part, will become apparent from the description, or may be learned by practice of the exemplary embodiments.

According to an aspect of an exemplary embodiment, there is provided a method for dismantling a calandria vessel underwater including: filling an inside of a concrete vault in which a calandria vessel is installed with water; opening the concrete vault by dismantling an RM-deck (reactivity-mechanism deck); installing a manipulator in the calandria vessel; dismantling an upper portion to cut and dismantle an upper portion of the calandria vessel and a fuel tube disposed inside the upper portion of the calandria vessel using the manipulator; and dismantling a lower portion to cut and dismantle a lower portion of the calandria vessel and a fuel tube disposed inside the lower portion of the calandria vessel using the manipulator.

In the installing the manipulator, the manipulator may be installed on a rail part provided at both ends of the calandria vessel, and in the dismantling the upper portion and dismantling the lower portion, the manipulator may be moved along the rail part in a circumferential direction of the calandria vessel.

The dismantling the upper portion may include dismantling a first vessel to cut the upper portion of the calandria vessel using first and second cutting apparatuses mounted on the manipulator and dismantling a first fuel tube to cut both ends of the fuel tube disposed inside the upper portion of the calandria vessel using the second cutting apparatus mounted on the manipulator.

The dismantling the lower portion may include dismantling a second fuel tube to cut both ends of the fuel tube disposed inside the lower portion of the calandria vessel using the second cutting apparatus mounted on the manipulator and dismantling a second vessel to cut the lower portion of the calandria vessel using the first and second cutting apparatuses mounted on the manipulator.

The method for dismantling the calandria vessel underwater may further include mounting a pair of first cutting apparatuses to the manipulator, spaced apart from each other in the circumferential direction and a longitudinal direction of the calandria vessel, and mounting a pair of second cutting apparatuses to the manipulator, spaced apart from each other in the circumferential direction and the longitudinal direction of the calandria vessel before the dismantling the first vessel.

The method for dismantling the calandria vessel underwater may further include a first changing to change an arrangement of the pair of first cutting apparatuses and the pair of second cutting apparatuses such that the pair of second cutting apparatuses are positioned facing each other and parallel to each other along the longitudinal direction of the calandria vessel in the manipulator after the dismantling the first vessel and before the dismantling the first fuel tube.

The method for dismantling the calandria vessel underwater may further include a second changing to change an arrangement of the pair of first cutting apparatuses and the pair of second cutting apparatuses such that the pair of first cutting apparatuses are spaced apart from each other in the circumferential and longitudinal directions of the calandria vessel and the pair of second cutting apparatuses are spaced apart from each other in the circumferential and longitudinal directions of the calandria vessel in the manipulator after the dismantling the second fuel tube and before the dismantling the second vessel.

In the dismantling the first fuel tube and dismantling the second fuel tube, the both ends of the fuel tube may be simultaneously cut by the pair of second cutting apparatuses mounted on the manipulator and positioned parallel to each other and facing each other along the longitudinal direction of the calandria vessel.

According to an aspect of another exemplary embodiment, there is provided a dismantling apparatus for dismantling a calandria vessel underwater including: a rail part provided at both ends of a calandria vessel disposed inside a concrete vault; a manipulator installed in the rail part; a first cutting apparatus mounted on the manipulator for cutting the calandria vessel; and a second cutting apparatus mounted on the manipulator for cutting the calandria vessel and a fuel tube disposed inside the calandria vessel.

The rail part may have a double rail structure and may be installed on an upper portion of the calandria vessel and may be extended toward a lower portion of the calandria vessel.

The manipulator may include: a main body installed in the rail part to traverse the calandria vessel in a longitudinal direction; and a pair of moving parts installed in the main body to be movable along the longitudinal direction, each of the pair of moving parts including a first extension extending in one direction along a circumferential direction of the calandria vessel and a second extension extending in the other direction along the circumferential direction of the calandria vessel, and a first mounting portion in which the first cutting apparatus is mounted may be provided in the first extension and the second mounting portion in which the second cutting apparatus is mounted may be provided in the second extension.

The first cutting apparatus may be movable in the longitudinal and vertical directions with respect to the first mounting portion to move closer to or further away from the calandria vessel.

The second mounting portion may be movable in the second extension along the circumferential direction.

The second cutting apparatus may include a second wheel saw, and the second wheel saw may be movable in a vertical direction in the second cutting apparatus to move closer to or further away from the calandria vessel.

Each moving part may be installed in the main body to be detachable therefrom, and when cutting the calandria vessel, the first mounting portion of one of the pair of moving parts and the second mounting portion of the other may be disposed facing each other in the longitudinal direction and arranged parallel to each other, when cutting the fuel tube, the second mounting portion of one of the pair of moving parts and the second mounting portion of the other may be disposed facing each other in the longitudinal direction and arranged parallel to each other.

According to one or more exemplary embodiments, it is possible to safely dismantle the calandria vessel and the fuel tube in the underwater environment while reducing radiation exposure to workers by using various apparatuses mounted in the manipulator installed in the calandria vessel. In particular, because an RM-deck is dismantled and the inside of the concrete vault is filled with water before the concrete vault is opened, radioactive contaminants inside the concrete vault are not spread, thus reducing the radiation exposure of workers.

In addition, it is possible to change effectively an arrangement of a pair of first cutting apparatuses and a pair of second cutting apparatuses mounted in the manipulator by adjusting an installation direction of the moving part. More specifically, when cutting the calandria vessel, the pair of first cutting apparatuses and the pair of second cutting apparatuses are disposed crosswise(diagonally), and when cutting the fuel tube, the pair of second cutting apparatuses may be disposed facing each other and parallel to each other so that both ends of the fuel tube can be cut simultaneously. Accordingly, cutting of each of the calandria vessel and the fuel tube can be performed effectively.

### BRIEF DESCRIPTION OF THE DRAWINGS

The above and other will be more clearly understood from the following description of the exemplary embodiments with reference to the accompanying drawings, in which:
FIG. 1 is a flowchart illustrating a method for dismantling a calandria vessel underwater according to an exemplary embodiment;
FIG. 2 is a view illustrating a state after a filling step in FIG. 1;
FIG. 3 is a view illustrating a state of a calandria vessel after an installing step and a mounting step in FIG. 1;
FIG. 4 is a view illustrating an appearance of a rail part which extends from FIG. 3;
FIG. 5 is a view of an apparatus for dismantling a calandria vessel underwater separated from FIG. 3;
FIG. 6 is a view of a state in which an upper portion of a calandria vessel is cut by a first cutting apparatus in a first vessel dismantling step of FIG. 1;
FIG. 7 is an enlarged view illustrating some portion of FIG. 6;
FIG. 8 is a view of a state in which a fuel tube is cut by a second cutting apparatus in a first fuel tube dismantling step of FIG. 1; and
FIG. 9 is a view of a state before a second fuel tube dismantling step and after a first fuel tube dismantling step of FIG. 1.

### DETAILED DESCRIPTION

Various modifications and various embodiments will be described with reference to the accompanying drawings so that those skilled in the art can easily carry out the disclosure. It should be understood, however, that the various embodiments are not for limiting the scope of the disclosure to the specific embodiments, but they should be interpreted to include all modifications, equivalents or alternatives of the embodiments included within the spirit and scope disclosed herein.

The terms described below are for the purpose of describing specific embodiments only, and are not intended to limit the scope of the present disclosure. As used herein, the singular forms "a", "an" and "the" are intended to include the plural forms as well, unless the context clearly indicates otherwise. In the disclosure, terms such as "comprises", "includes", or "have/has" should be construed as designating that there are such features, integers, steps, operations, components, parts, and/or combinations thereof, and do not exclude the presence or possibility of adding of one or more of other features, integers, steps, operations, components, parts, and/or combinations thereof.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions are not described in detail since they would obscure the description with unnecessary detail.

It will be understood that, although the terms first, second, etc. may be used herein to describe various elements, these elements should not be limited by these terms. These terms are only used to distinguish one element from another. The terms, such as 'part' or 'module', etc., should be understood as a unit that performs at least one function or operation and that may be embodied as hardware, software, or a combination thereof. With respect to an element described as a "unit" or "module", two or more elements may be combined into a single element, or a single element may be divided into two or more elements according to the subdivided functions. Also, each element described below may additionally perform some or all of functions performed by other elements, in addition to its main functions, and some of the main functions of each element may be performed entirely by other components.

Hereinafter, a method for dismantling a calandria vessel underwater and an apparatus for dismantling the same according to exemplary embodiments will be described in detail with reference to the accompanying drawings.

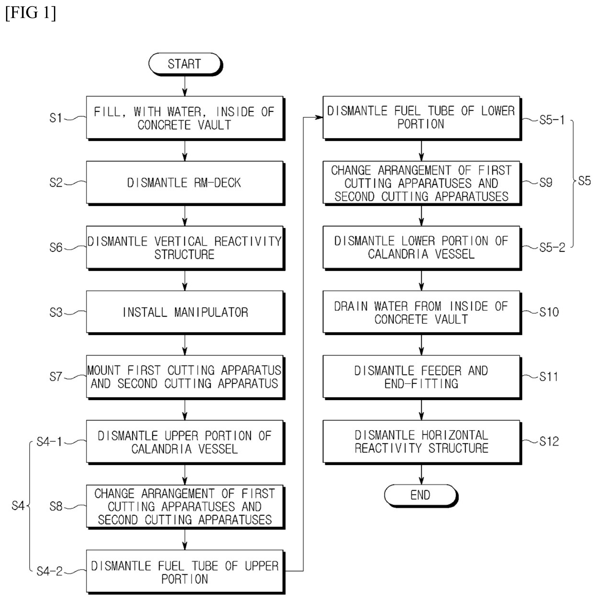

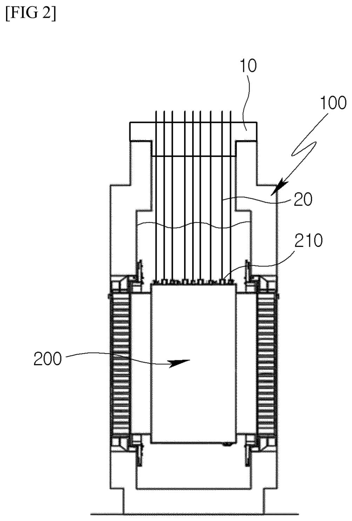

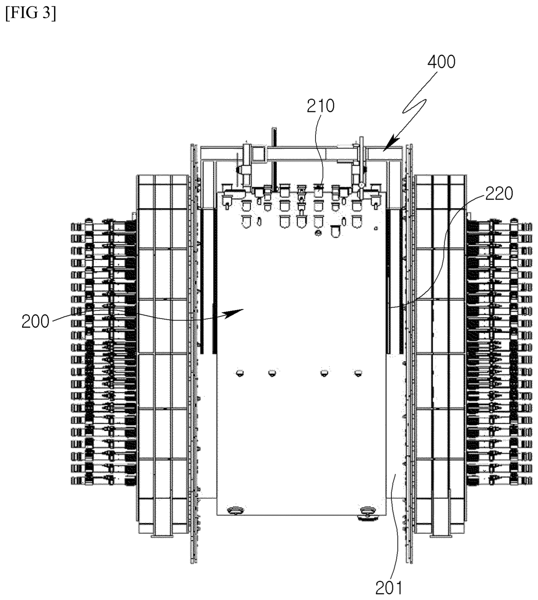

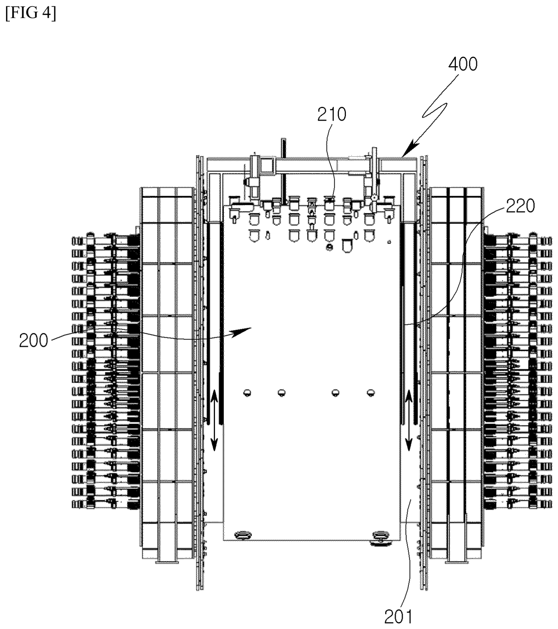

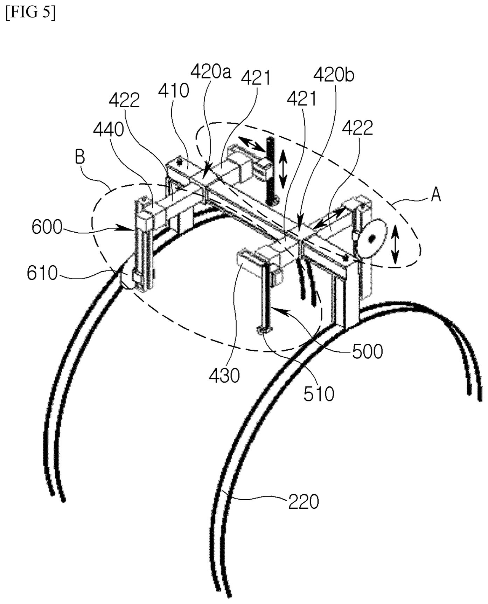

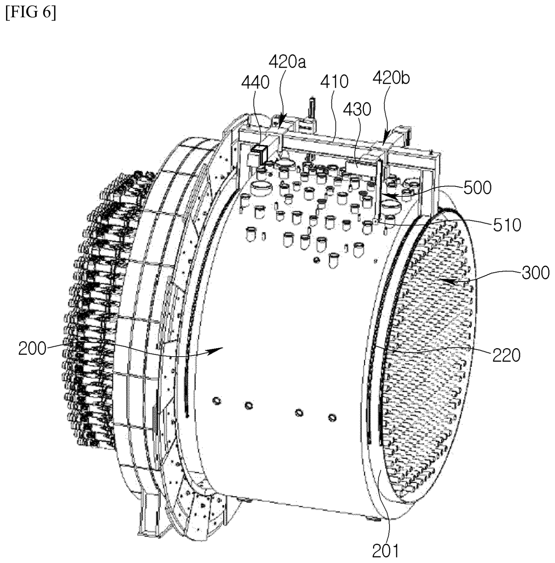

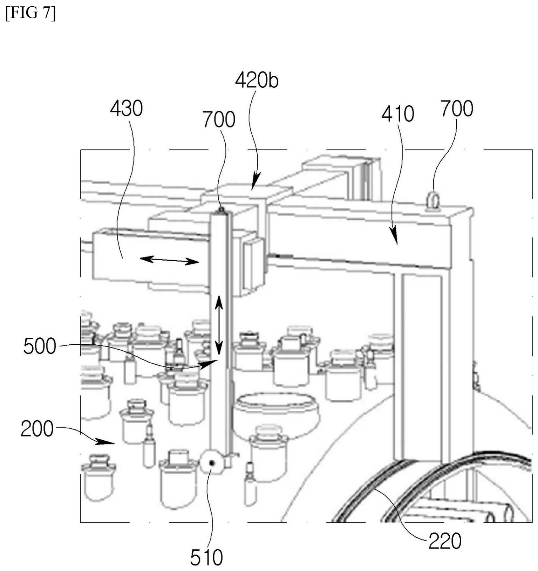

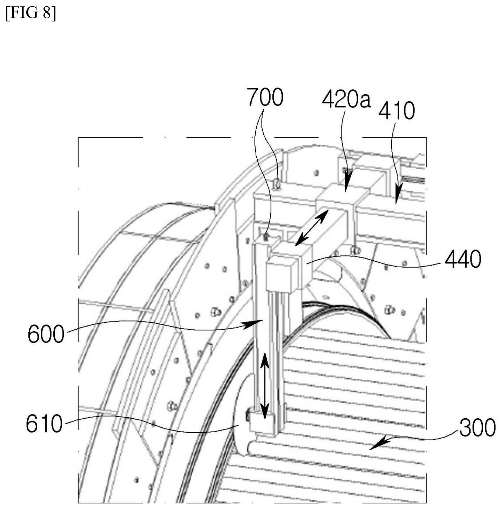

FIG. 1 is a flowchart illustrating a method for dismantling a calandria vessel underwater according to an exemplary embodiment. FIG. 2 is a view illustrating a state after a filling step in FIG. 1. FIG. 3 is a view illustrating a state of a calandria vessel after an installing step and a mounting step in FIG. 1. FIG. 4 is a view illustrating an appearance of a rail part which extends from FIG. 3. FIG. 5 is a view of an apparatus for dismantling a calandria vessel underwater separated from FIG. 3. FIG. 6 is a view of a state in which an upper portion of a calandria vessel is cut by a first cutting apparatus in a first vessel dismantling step of FIG. 1. FIG. 7 is an enlarged view illustrating some portion of FIG. 6. FIG. 8 is a view of a state in which a fuel tube is cut by a second cutting apparatus in a first fuel tube dismantling step of FIG. 1.

Referring to FIG. 1, a method for dismantling a calandria vessel underwater according to an exemplary embodiment includes a filling step (S1), an opening step (S2), an installing step (S3), an upper portion dismantling step (S4), and a lower portion dismantling step (S5).

Referring to FIGS. 1 and 2, in the filling step (S1), an inside of a concrete vault 100 in which a calandria vessel 200 is installed is filled with water. FIG. 2 shows a state after the filling step S1, and it can be seen that the calandria vessel 200 is entirely submerged. The concrete vault 100 is closed by an RM-deck (reactivity-mechanism deck) 10 which covers an upper portion.

In the opening step (S2), the RM-deck 10 is dismantled to open the concrete vault 100. By filling the inside of the concrete vault 100 with water and then opening the concrete vault 100, the spread of radioactive contaminants inside the concrete vault 100 is prevented, and thus radiation exposure of workers can be reduced.

After disassembling the RM-deck 10 in the opening step (S2), a vertical reactivity structure dismantling step S6 may be further performed to disassemble a vertical reactivity structure, which includes a vertical reactivity controller 20 inserted into a protrusion lug 210 of the calandria vessel 200 and extending to the RM-deck 10.

After the opening step (S2), in the installing step (S3), a manipulator 400 may be installed in the calandria vessel 200. As illustrated in FIG. 3, rail parts 220 are installed at both ends of the calandria vessel 200. In detail, the rail parts 220 may be installed on auxiliary cells 201 located at both ends of the calandria vessel 200. Accordingly, in the installing step (S3), the manipulator 400 is installed in the rail parts 220, and subsequently, in the upper portion dismantling step (S4) and the lower portion dismantling step (S5), the manipulator 400 may move along the rail parts 220 in a circumferential direction of the calandria vessel 200.

In the present embodiment, the rail part 220 is a dual rail and is extendable. Referring to FIG. 4, the rail part 220 is installed on an upper portion of the calandria vessel 200 and may extend to a lower portion of the calandria vessel 200. Therefore, as the manipulator 400 moves to the lower portion as well as the upper portion of the calandria vessel 200, the calandria vessel 200 and the fuel tube 300 may be safely disassembled in an underwater environment while reducing radiation exposure to workers by using various types of devices mounted in the manipulator 400.

Referring to FIG. 5, a detailed structure of the manipulator 400 will be described. The manipulator 400 includes a main body 410 installed in the rail part 220 to traverse the calandria vessel 200 in a longitudinal direction, and a pair of moving parts 420a and 420b installed to be movable in the main body 410 along the longitudinal direction. Each moving parts has a first extension 421 extending in one direction along the circumferential direction of the calandria vessel 200, and a second extension 422 extending in the other direction along the circumferential direction of the calandria vessel 200.

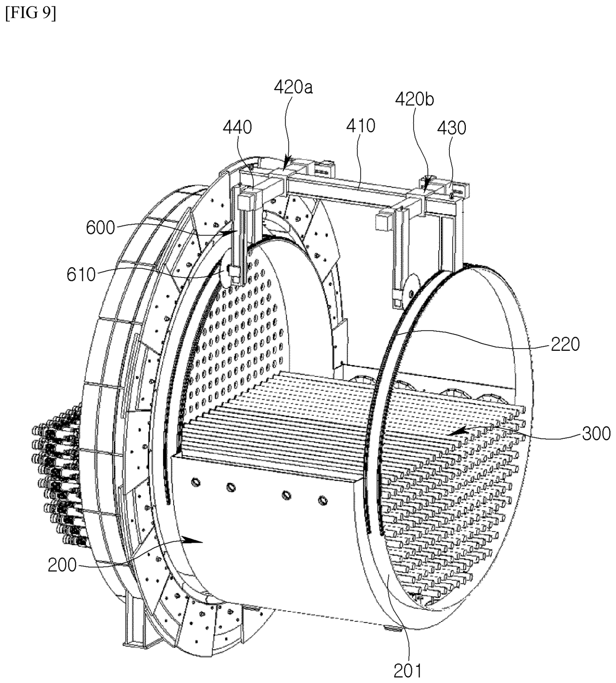

The first extension 421 is provided with a first mounting portion 430 to which a first cutting apparatus 500 is mounted, and the second extension 422 is provided with a second mounting portion 440 to which a second cutting apparatus 600 is mounted. The first mounting portion 430 is illustrated in FIG. 6 in a state in which the first cutting apparatus 500 is not mounted thereon, and the second mounting portion 440 is illustrated in FIG. 9 in a state in which the second cutting apparatus 600 is not mounted thereon.

Thereafter, the dismantling of the calandria vessel 200 and the fuel tube 300 disposed inside the calandria vessel 200 is performed. First, the upper portion dismantling step (S4) is performed, in which the upper portion of the calandria vessel 200 and the fuel tube 300 disposed inside the upper portion of the calandria vessel 200 are cut and dismantled using the manipulator 400. Then, the lower portion dismantling step (S5) is performed, in which the lower portion of the calandria vessel 200 and the fuel tube 300 disposed inside the lower portion of the calandria vessel 200 are cut and dismantled using the manipulator 400.

Specifically, the upper portion dismantling step (S4) may include a first vessel dismantling step (S4-1) of cutting the upper portion of the calandria vessel 200 using the first cutting apparatus 500 and the second cutting apparatus 600 mounted on the manipulator 400, and a first fuel tube dismantling step (S4-2) of cutting both ends of the fuel tube 300 disposed inside the upper portion of the calandria vessel 200, which are exposed after performing the first vessel dismantling step (S4-1), using the second cutting apparatus 600 mounted on the manipulator 400.

When dismantling the upper portion of the calandria vessel 200, the fuel tube 300 cannot be dismantled without first dismantling the calandria vessel 200 due to interference because the fuel tube 300 is located inside the calandria vessel 200 and the calandria vessel 200 is cylindrical.

Before the first vessel dismantling step (S4-1), a mounting step (S7) of mounting the first cutting apparatus 500 and the second cutting apparatus 600 on the manipulator 400 is performed. At this instance, it is preferable that a pair of first cutting apparatuses 500 are positioned apart from each other in both the circumferential and longitudinal directions of the calandria vessel 200, and a pair of second cutting apparatuses 600 are also positioned apart from each other in both the circumferential and longitudinal directions of the calandria vessel 200. That is, as shown in FIG. 5, when cutting the calandria vessel 200, both the pair of first cutting apparatuses 500 and the pair of second cutting apparatuses 600 are disposed diagonally.

To this end, when cutting the calandria vessel 200, the first mounting portion 430 of one of the pair of moving parts 420a and 420b, and the second mounting portion 440 of the other are arranged parallel to each other in the longitudinal direction, facing each other. That is, the first mounting portion 430 and the second mounting portion 440 are arranged facing each other and parallel to each other in both area A which is one side of the main body 410 and area B which is the other side of the main body 410. By this arrangement, the cutting of the calandria vessel 200 can be performed effectively.

For example, the calandria vessel 200 may be cut in the longitudinal direction using the first cutting apparatus 500 in area A, which is mounted on the first mounting portion 430 of the moving part 420a, while moving the moving part 420a in the longitudinal direction with respect to the main body 410. Then, the entire manipulator 400 may be moved circumferentially along the rail part 220, and the calandria vessel 200 may be cut in the circumferential direction using the second cutting apparatus 600 in area A, which is mounted on the second mounting portion 440 of the moving part 420b. Subsequently, the calandria vessel 200 may be cut in the longitudinal direction using the first cutting apparatus 500 in area B, which is mounted on the first mounting portion 430 of the moving part 420b, while moving the moving part 420b in the longitudinal direction with respect to the main body 410. And then, the entire manipulator 400 may be moved circumferentially along the rail part 220, and the calandria vessel 200 may be cut in the circumferential direction using the second cutting apparatus 600 in area B, which is mounted on the second mounting portion 440 of the moving part 420a.

The upper portion of the cut calandria vessel 200 may be lifted using additional lifting devices such as a crane and removed from outside the concrete vault 100.

In the first vessel dismantling step (S4-1), the upper portion of the calandria vessel 200 can be cut at once, or the upper portion of the calandria vessel 200 can be cut into multiple pieces.

However, the disclosed technology is not limited thereto, and as needed, when cutting the calandria vessel 200, the first mounting portion 430 of one of the pair of moving parts 420a and 420b and the first mounting portion 430 of the other, and the second mounting portion 440 of one of the pair of moving parts 420a and 420b and the second mounting portion 440 of the other may be arranged parallel to each other so that they face each other.

As indicated by the arrows in FIGS. 5 and 7, the first cutting apparatus 500 may move in the longitudinal direction with respect to the first mounting portion 430, or move vertically to move closer to or further away from the calandria vessel 200. Therefore, when the first cutting apparatus 500 is not in use, the first cutting apparatus 500 may be moved upwards to avoid interference with the calandria vessel 200 or the fuel tube 300.

As indicated by the arrows in FIGS. 5 and 8, the second mounting portion 440 may move in the circumferential direction along the second extension 422. In addition, the second cutting apparatus 600 may include a second wheel saw 610, which may move in the vertical direction within the second cutting device 600 to move closer to or further away from the calandria vessel 200. Therefore, when the second cutting apparatus 600 is not in use, the second cutting apparatus 600 may be moved upwards to avoid interference with the calandria vessel 200 or the fuel tube 300. However, in some cases, the second wheel saw 610 may not move vertically within the second cutting apparatus 600, but the second cutting apparatus 600 may move in the vertical direction with respect to the second mounting portion 440.

In this embodiment, both the calandria vessel 200 and the fuel tube 300 may be cut using a mechanical cutting method. Therefore, the first cutting apparatus 500 includes a first wheel saw 510, and the second cutting apparatus 600 includes the second wheel saw 610. In this case, a diameter of the second wheel saw 610 is greater than a diameter of the first wheel saw 510. The second wheel saw 610 is required to cut the fuel tube 300, and the fuel tube 300 has a dual tube structure including a calandria tube and a pressure tube positioned inside the calandria tube. For example, the first wheel saw 510 may be a disc-type wheel saw and the second wheel saw 610 may be a diamond wheel saw.

The calandria vessel 200 is formed of stainless steel and requires work to a depth of 15m from the RM-deck 10. The fuel tube 300 is formed of zirconium alloy, and because brittleness thereof increases due to a neutron irradiation, the mechanical cutting method capable of operating at a low speed may be applied to cutting the fuel tube 300.

In the first fuel tube dismantling step (S4-2), it is preferable to simultaneously cut both ends of the fuel tube 300 using the pair of second cutting apparatuses 600 mounted on the manipulator 400 and arranged parallel to each other and facing each other in the longitudinal direction of the calandria vessel 200.

To this end, after the first vessel dismantling step (S4-1) and before the first fuel tube dismantling step (S4-2), a first changing step (S8) can be performed to change an arrangement of the pair of first cutting apparatuses 500 and the pair of second cutting apparatuses 600, so that the pair of second cutting apparatuses 600 can be mounted facing each other and parallel to each other in the longitudinal direction in the manipulator 400.

Each of the moving parts 420a and 420b is detachably installed in the main body 410. More specifically, it is possible to easily adjust an installation direction of the moving parts 420a and 420b by separating each moving part 420a and 420b from the end of the main body 410 and then reattaching them to the end of the main body 410.

In the first changing step (S8), by reversing an installation direction of one of the pair of moving parts 420a and 420b, the first mounting portion 430 of one of the pair of moving parts 420a and 420b and the first mounting portion 430 of the other, and the second mounting portion 440 of one of the pair of moving parts 420a and 420b and the second mounting portion 440 of the other are arranged parallel to each other in the longitudinal direction so that they face each other. That is, only the first mounting portion 430 may be disposed in one area among the area A which is one side of the main body 410 and the area B which is the other side of the main body 410, and only the second mounting portion 440 may be disposed in the other area among the areas A and B. With this arrangement, cutting of the fuel tube 300 can be effectively performed.

In the first fuel tube dismantling step (S4-2), the fuel tube 300 may be cut one by one. The fuel tube 300 may then be lifted and removed from outside the concrete vault 100 using an additional lifting apparatus such as a crane.

FIG. 9 is a state before a second fuel tube dismantling step (S5-1) and after the first fuel tube dismantling step (S4-2).

Referring to FIGS. 1 and 9, the lower portion dismantling step (S5) includes the second fuel tube dismantling step (S5-1) of cutting both ends of the fuel tube 300 disposed inside the lower portion of the calandria vessel 200 using the second cutting apparatus 600 mounted in the manipulator 400, and a second vessel dismantling step (S5-2) of cutting the lower portion of the calandria vessel 200 using the first cutting apparatus 500 and the second cutting apparatus 600 mounted in the manipulator 400.

When dismantling the lower portion of the calandria vessel 200, if the fuel tube 300 interferes with the calandria vessel 200 and the fuel tube 300 is not completely dismantled, it will be impossible to dismantle the lower portion of the calandria vessel 200. Therefore, it is preferable to dismantle the fuel tube 300 first before dismantling the calandria vessel 200.

Likewise, in the second fuel tube dismantling step (S5-1), it is preferable that the pair of second cutting apparatuses 600 mounted in the manipulator 400 simultaneously cut both ends of the fuel tube 300 while being positioned facing each other and parallel in the longitudinal direction. Therefore, there is no need to change the arrangement of the pair of first cutting apparatuses 500 and the pair of second cutting apparatuses 600 after the first fuel tube dismantling step (S4-2) and before the second fuel tube dismantling step (S5-1). That is, after dismantling the upper portion of the fuel tube 300, all the fuel tubes 300 are sequentially dismantled down to the lower portion of the fuel tube 300.

However, a longer second cutting apparatus 600 may be used when cutting the lower portion of the fuel tube 300 as needed.

After the second fuel tube dismantling step (S5-1) and before the second vessel dismantling step (S5-2), a second changing step (S9) may be additionally performed to change an arrangement of the pair of first cutting apparatuses 500 and the pair of second cutting apparatuses 600 may be additionally performed. In this step, the pair of first cutting apparatuses 500 are mounted on the manipulator 400 so that they are spaced apart from each other in the circumferential and longitudinal directions of the calandria vessel 200, and the pair of second cutting apparatuses 600 are also mounted on the manipulator 400 so that they are spaced apart from each other in the circumferential and longitudinal directions of the calandria vessel 200.

However, in some cases, if the lower portion of the calandria vessel 200 is cut in one piece without being divided into multiple pieces, the pair of first cutting apparatuses 500 may not be used in the second vessel dismantling step (S5-2), and the second changing step (S9) may not be performed.

Referring again to FIG. 1, after the lower portion dismantling step (S5), a draining step (S10) is performed to drain water inside the concrete vault 100. Thereafter, other dismantling steps for other structures inside the concrete vault 100 may be performed, such as a feeder/end-fitting dismantling step (S11) of dismantling a feeder and an end-fitting, and a horizontal reactivity structure dismantling step (S12) of dismantling a horizontal reactivity structure.

In order to install or dismantle the manipulator 400, the first cutting apparatus 500 and the second cutting apparatus 600 to the outside of the concrete vault 100 by lifting them with a crane, a lug 700 for being lifted by the crane may be provided in the main body 410, the first cutting apparatus 500, and the second cutting apparatus 600, respectively.

While one or more exemplary embodiments have been described with reference to the accompanying drawings, it will be apparent to those skilled in the art that various variations and modifications may be made by adding, changing, or removing components without departing from the spirit and scope of the disclosure as defined in the appended claims, and these variations and modifications fall within the spirit and scope of the disclosure as defined in the appended claims. Therefore, the description of the exemplary embodiments should be construed in a descriptive sense and not to limit the scope of the claims, and many alternatives, modifications, and variations will be apparent to those skilled in the art.

## Claims

1. A method for dismantling a calandria vessel underwater, the method comprising:
filling an inside of a concrete vault in which a calandria vessel is installed with water;
opening the concrete vault by dismantling an RM-deck (reactivity-mechanism deck);
installing a manipulator in the calandria vessel;
dismantling an upper portion to cut and dismantle an upper portion of the calandria vessel and a fuel tube disposed inside the upper portion of the calandria vessel using the manipulator; and
dismantling a lower portion to cut and dismantle a lower portion of the calandria vessel and a fuel tube disposed inside the lower portion of the calandria vessel using the manipulator.

2. The method for dismantling the calandria vessel underwater of claim 1,
wherein in the installing the manipulator, the manipulator is installed on a rail part provided at both ends of the calandria vessel, and
wherein in the dismantling the upper portion and dismantling the lower portion, the manipulator is moved along the rail part in a circumferential direction of the calandria vessel.

3. The method for dismantling the calandria vessel underwater of claim 2,
wherein the dismantling the upper portion comprises:
dismantling a first vessel to cut the upper portion of the calandria vessel using first and second cutting apparatuses mounted on the manipulator; and
dismantling a first fuel tube to cut both ends of the fuel tube disposed inside the upper portion of the calandria vessel using the second cutting apparatus mounted on the manipulator.

4. The method for dismantling the calandria vessel underwater of claim 3,
wherein the dismantling the lower portion comprises:
dismantling a second fuel tube to cut both ends of the fuel tube disposed inside the lower portion of the calandria vessel using the second cutting apparatus mounted on the manipulator; and
dismantling a second vessel to cut the lower portion of the calandria vessel using the first and second cutting apparatuses mounted on the manipulator.

5. The method for dismantling the calandria vessel underwater of claim 4, further comprising:
mounting a pair of first cutting apparatuses to the manipulator, spaced apart from each other in the circumferential direction and a longitudinal direction of the calandria vessel, and mounting a pair of second cutting apparatuses to the manipulator, spaced apart from each other in the circumferential direction and the longitudinal direction of the calandria vessel before the dismantling the first vessel.

6. The method for dismantling the calandria vessel underwater of claim 5, further comprising:
a first changing to change an arrangement of the pair of first cutting apparatuses and the pair of second cutting apparatuses such that the pair of second cutting apparatuses are positioned facing each other and parallel to each other along the longitudinal direction of the calandria vessel in the manipulator after the dismantling the first vessel and before the dismantling the first fuel tube.

7. The method for dismantling the calandria vessel underwater of claim 6, further comprising:
a second changing to change an arrangement of the pair of first cutting apparatuses and the pair of second cutting apparatuses such that the pair of first cutting apparatuses are spaced apart from each other in the circumferential and longitudinal directions of the calandria vessel and the pair of second cutting apparatuses are spaced apart from each other in the circumferential and longitudinal directions of the calandria vessel in the manipulator after the dismantling the second fuel tube and before the dismantling the second vessel.

8. The method for dismantling the calandria vessel underwater of claim 4,
wherein in the dismantling the first fuel tube and dismantling the second fuel tube, the both ends of the fuel tube are simultaneously cut by the pair of second cutting apparatuses mounted on the manipulator and positioned parallel to each other and facing each other along the longitudinal direction of the calandria vessel.

9. A dismantling apparatus for dismantling a calandria vessel underwater comprising:
a rail part provided at both ends of a calandria vessel disposed inside a concrete vault;
a manipulator installed in the rail part;
a first cutting apparatus mounted on the manipulator for cutting the calandria vessel; and
a second cutting apparatus mounted on the manipulator for cutting the calandria vessel and a fuel tube disposed inside the calandria vessel.

10. The dismantling apparatus of claim 9,
wherein the rail part has a double rail structure and is installed on an upper portion of the calandria vessel and is extended toward a lower portion of the calandria vessel.

11. The dismantling apparatus of claim 9,
wherein the manipulator comprises:
a main body installed in the rail part to traverse the calandria vessel in a longitudinal direction;
and
a pair of moving parts installed in the main body to be movable along the longitudinal direction, each of the pair of moving parts comprising a first extension extending in one direction along a circumferential direction of the calandria vessel and a second extension extending in the other direction along the circumferential direction of the calandria vessel, and
wherein a first mounting portion in which the first cutting apparatus is mounted is provided in the first extension and the second mounting portion in which the second cutting apparatus is mounted is provided in the second extension.

12. The dismantling apparatus of claim 11,
wherein the first cutting apparatus is movable in the longitudinal and vertical directions with respect to the first mounting portion to move closer to or further away from the calandria vessel.

13. The dismantling apparatus of claim 11,
wherein the second mounting portion is movable in the second extension along the circumferential direction.

14. The dismantling apparatus of claim 13,
wherein the second cutting apparatus comprises a second wheel saw, and
wherein the second wheel saw is movable in a vertical direction in the second cutting apparatus to move closer to or further away from the calandria vessel.

15. The dismantling apparatus of claim 11,
wherein each moving part is installed in the main body to be detachable therefrom,
wherein when cutting the calandria vessel, the first mounting portion of one of the pair of moving parts and the second mounting portion of the other are disposed facing each other in the longitudinal direction and arranged parallel to each other, and
wherein when cutting the fuel tube, the second mounting portion of one of the pair of moving parts and the second mounting portion of the other are disposed facing each other in the longitudinal direction and arranged parallel to each other.
